# EUROPEAN PATENT SPECIFICATION

(11) **EP 4 066 612 B1**
(45) Date of publication and mention of the grant of the patent: **29.01.2025**
(21) Application number: 21166481.8
(22) Date of filing: 31.03.2021
(51) Int. Cl.: A01C 7/20, A01B 63/02, A01C 7/00

(54) **WORKING UNIT OF A CULTIVATOR**
ARBEITSEINHEIT EINES KULTIVATORS
UNITÉ DE TRAVAIL D'UN CULTIVATEUR

(43) Date of publication of application: 05.10.2022
(73) Proprietor: Czajkowski Maszyny Sp. z o.o., 87-400 Sokolowo (PL)
(72) Inventor: Czajkowski, Maciej, Sokolowo (PL)
(74) Representative: Wroblewski, Marcin Jan

(56) References cited:
- EP-A1- 3 556 192
- EP-A1- 3 556 193
- US-A1- 2020 359 545

## Description

### Technical field

The invention relates to a working unit of a cultivator, especially a strip-till cultivator.

### Background of the invention

In traditional state-of-the-art solutions, the positions of working sections were determined by openings made in the bearing elements of the working unit. In order to adjust the spacing of the working sections, it was necessary go under the cultivator and remove the individual sections, and then carry and fixed them at the set positions. This was inefficient and made the work of the cultivator's user more difficult.

EP3504949B1 discloses a potato ridge cultivator comprising a main frame and three to five working units, wherein at least one central working unit is rigidly fixed in the central area of the main frame and at least two end-working-units are movably fixed on tilting arms that are fixed to the main frame with the ability to rotate from vertical to horizontal position and vice versa, and are connected to hydraulic drives for lifting and tilting. Furthermore, the cultivator is equipped with a device for monitoring the line or spacing of the ridges while the cultivator is travelling, as well as a cooperating adjuster, e.g. a hydraulic actuator, for automatically adjusting the horizontal movement of the working units in relation to a change in the line or spacing of the ridges. The disclosed solution ensures stepless adjustment of the spacing of the working sections to the right and to the left, but this adjustment is limited by the range of movement of said adjuster.

KR1020190044759A discloses an agricultural machine adapted to adjust spacing between working sections and, consequently, spacing between crops. In said agricultural machine, spacing is adjusted by turning a screw shaft comprising two threaded parts extending from its ends and a non-threaded central part between them. Consequently, this adjustment is limited by the position in which the screw shaft is installed, and by the length of its threaded parts.

US2020359545A1 discloses a working unit comprising a laterally extending toolbar and a laterally extending rockshaft, both fixed to the main frame of the working unit. Further, the working unit comprising and ground openers to be fixed to the rockshaft and toolbar. Furthermore, the working unit comprising collar mounts and a pair of mount arms performing as blocking elements.

EP3556192A1 reveals an agricultural soil cultivation machine comprising a working unit having a front and rear beam, working sections such as cutting sections fixed to the beams in a determined position by locking elements in a form of bolts.

From EP3556193A1 there is known a working unit of the agricultural machine comprising a bearing element in a form of a beam and working sections, wherein the working sections have a form of seeding elements and fertilizer diggers. Furthermore, the working unit comprises a tool attachment structure adopted to move along the beam and to hold the working sections.

Although the above-cited patent literature discloses a variety of proposals for working units of cultivators, there is still a need to improve of a stepless adjustment of the position of working sections of working units along the entire length of both bearing elements and rear bearing elements of said working units and as a result spacing between the working sections. Therefore, the object of the invention is to provide a working unit of a cultivator which ensures an improved stepless adjustment of the position of individual working sections along the entire length a bearing element and a rear bearing element of said working unit.

### Brief summary of the invention

The object of the invention is a working unit of a cultivator as defined by the subject-matter of independent claim 1. Particular embodiments of the invention are defined in the dependent claims.

For the purposes of present invention, a rail means a structural element that allows the working section to be suspended there or supported thereon and to be shifted along the bearing element and/or the rear bearing element, for example, a longitudinal projection, a guide, etc.

The application of the at least one roller in at least one of the working sections for move said at least one working section along the rails, wherein the at least one roller is fixed to at least one body and the at least one body is connected to the at least one the working sections.

Preferably, the at least one of the working sections comprises at least two rollers.

Preferably, the least one body is detachably connected to the at least one of the working sections.

Preferably, the at least one of the working sections comprises at least two bodies arranged in such a way that each body moves along a different rail when the working sections are being moved.

Preferably, the at least one first working section is suspended from the at least one rail of the rear bearing element by means of the at least one locking element.

Application of the at least one locking element ensures that a stable connection is maintained between the rear bearing element and the at least one first working section.

Preferably, the at least one second working section is shorter than the at least one first working section suspended from at least one rail of the bearing element and from at least one rail of the rear bearing element and it is suspended from at least two rails of the bearing element or from at least two rails of the rear bearing element.

Preferably, the at least one first working section for soil cultivation is fixed to each of the rails of the bearing element.

Preferably, the at least one first and the at least second working section are offset from each other.

Application of mutual offset of the at least one first working section suspended from the at least one rail of the bearing element and the at least one rail of the rear bearing element, and of the at least one second working section suspended from the at least two rails of the bearing element or the at least two rails of the rear bearing element, ensures improved smoothness of work of the cultivator thanks to the reduction in its pull force.

Preferably, the rear bearing element is connected to the bearing element using at least one connecting member.

Preferably, the at least one connecting member is located at the end of the bearing element opposite to the main frame of the cultivator.

Preferably, the bearing element has a form of a frame that has at least two beams connected by connecting members, wherein the rails are located on at least one side of each of the beams.

Preferably, the working unit comprises at least one extension element for making the bearing element longer, wherein, preferably, the rail of the extension element makes the rail of the bearing element longer, allowing the at least one first working section to be moved over a greater range. Preferably, the rail of the extension element adheres to the rail of the bearing element.

Preferably, the working unit comprises at least one extension element for making the rear bearing element longer, wherein, preferably, the rail of the extension element makes the rail of the rear bearing element longer, allowing the at least one second working section to be moved over a greater range. Preferably, the rail of the extension element adheres to the rail of the rear bearing element.

Preferably, the extension elements are connected by a connecting member.

### Advantages of the invention

The construction of the working unit of a cultivator ensures stepless adjustment of the positions of individual working sections and, consequently, of the spacing between them along the entire length of the bearing element.

The construction of the working unit ensures an increase in its durability and, as a result, reduces its failure rate, which, in turn, reduces the financial expenditure associated with the use of such a unit.

The working unit of the invention is a modular solution, thanks to which the sizes and weights of its individual components allow to simplify and accelerate its installation without the need to use heavy equipment such as cranes, jacks, gantries, or forklifts.

### Description of the drawing figures

Embodiments of the subject matter of the invention have been presented in the drawing, where:

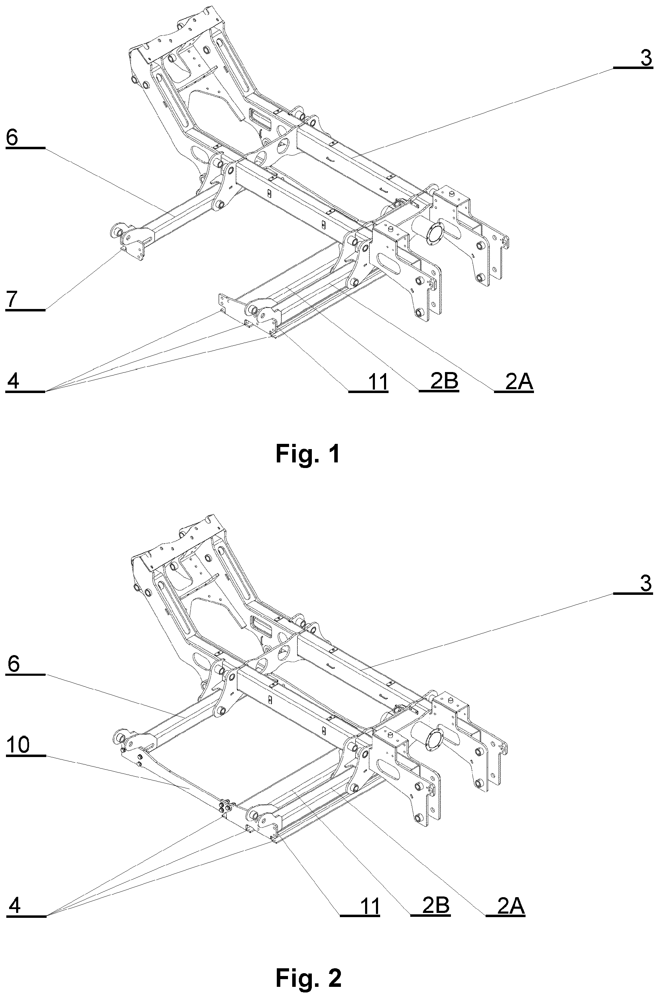

- Fig. 1: presents the bearing element in the form of two beams as well as the rear bearing element of the working unit of the invention, fixed to the main frame of a cultivator in a perspective view;
- Fig. 2: presents the bearing element in the form of two beams connected to the rear bearing element of the working unit of the invention, fixed to the main frame of a cultivator in a perspective view;

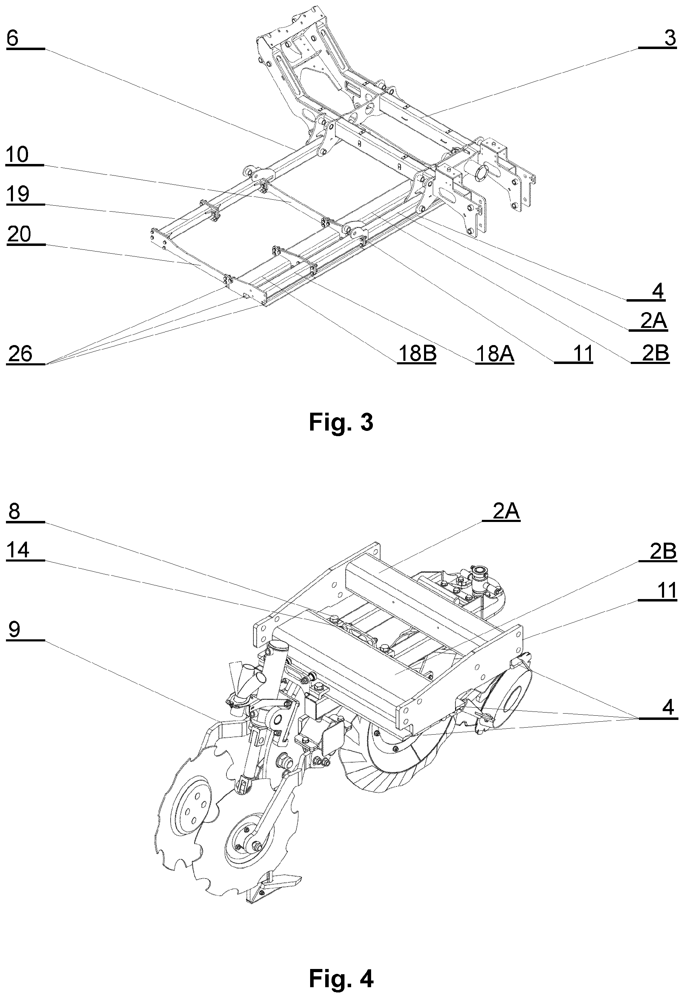

- Fig. 3: presents the bearing element in the form of two beams connected to the rear bearing element together with extension elements of the working unit of the invention, fixed to the main frame of a cultivator in a perspective view;
- Fig. 4: presents a single second working section suspended from the bearing element in the form of two beams using locking elements of the working unit of the invention in an enlarged perspective view;

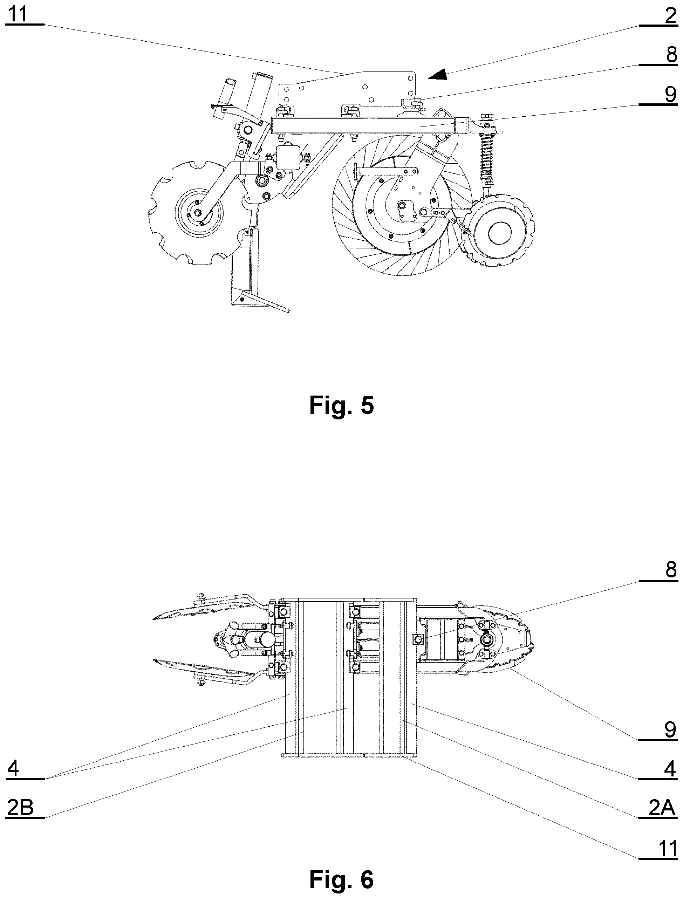

- Fig. 5: presents a single second working section suspended from the bearing element in the form of two beams using locking elements of the working unit of the invention in an enlarged view from the side;
- Fig. 6: presents a single working section suspended from the bearing element in the form of two beams using locking elements of the working unit of the invention in an enlarged view from above;

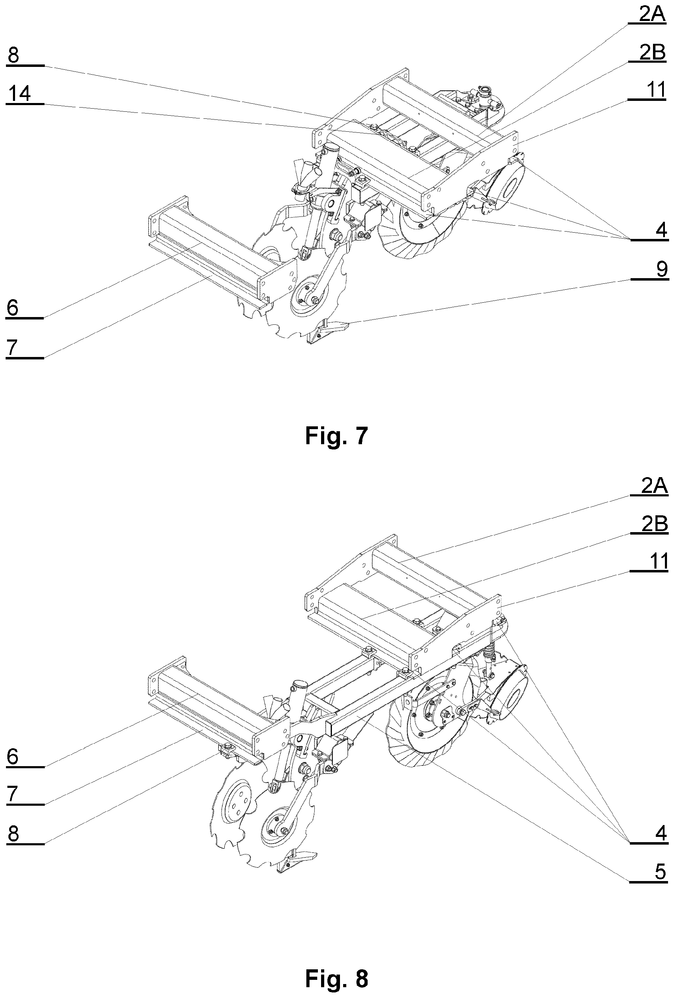

- Fig. 7: presents a single second working section suspended from the bearing element in the form of two beams using locking elements with the visible rear bearing element of the working unit of the invention in an enlarged perspective view;
- Fig. 8: presents a single first working section suspended from the bearing element in the form of two beams and from the rear bearing element by means of locking elements of the working unit of the invention in an enlarged perspective view;

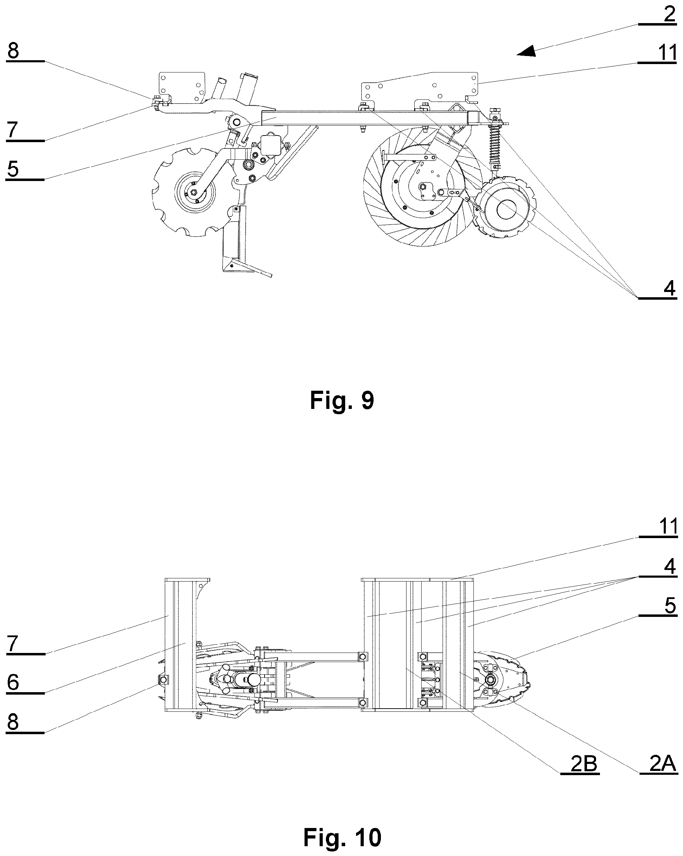

- Fig. 9: presents a single first working section suspended from the bearing element in the form of two beams and from the rear bearing element by means of locking elements of the working unit of the invention in an enlarged view from the side;
- Fig. 10: presents a single first working section suspended from the bearing element in the form of two beams and on the rear bearing element by means of locking elements of the working unit of the invention in an enlarged view from above;
- Fig. 11: presents the working unit of the invention fixed to the main frame of the cultivator with first working sections suspended from the bearing element and from the rear bearing element as well as the second working sections suspended only from the bearing element in a perspective view from the rear of the cultivator;
- Fig. 12: presents the working unit of the invention in a perspective view from the rear of the cultivator;
- Fig. 13: presents the working unit of the invention in a perspective view from the front of the cultivator;
- Fig. 14: presents the working unit of the invention in a view from above;
- Fig. 15: presents the working unit of the invention in a view from the side;
- Fig. 16: schematically presents the offset of the working sections of the working unit of the invention in a view from above, with lines demonstratively illustrating how the cultivated soil and harvest residues pass through;
- Fig. 17: presents the working unit of the invention in a view from above, together with the connecting members that form a lattice;
- Fig.: 18Apresents the bearing element in the form of two beams of the working unit of the invention in a view from the side;

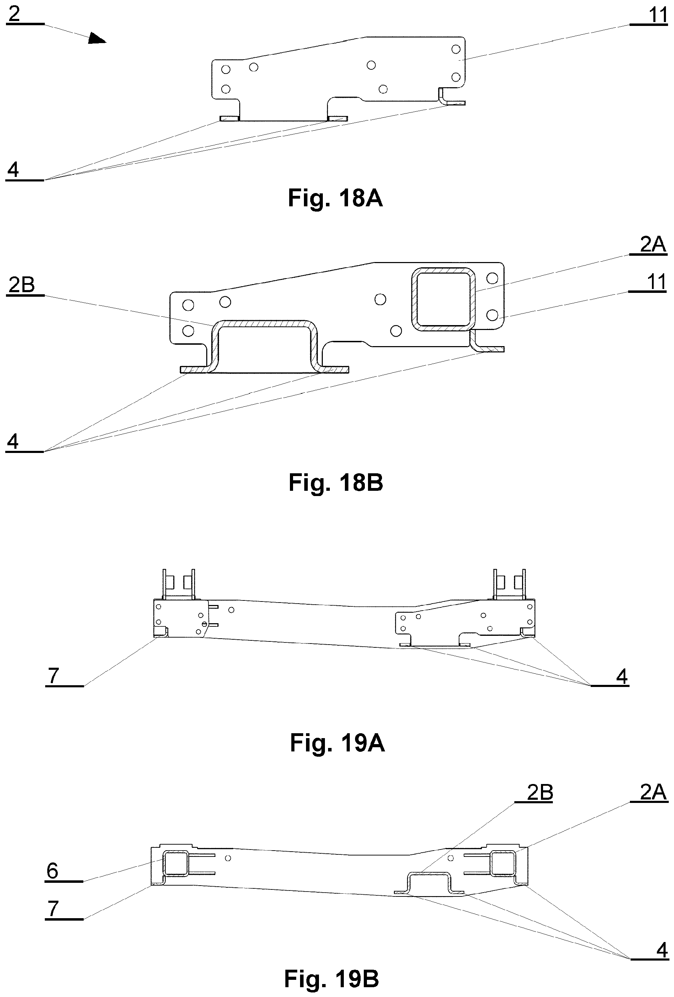

- Fig. 18B: presents the bearing element in the form of two beams of the working unit of the invention in a cross-section;
- Fig.: 19Apresents the bearing element in the form of two beams as well as the rear bearing element of the working unit of the invention in a view from the side;
- Fig.: 19Bpresents the bearing element as well as the rear bearing element of the working unit of the invention in a cross-section;

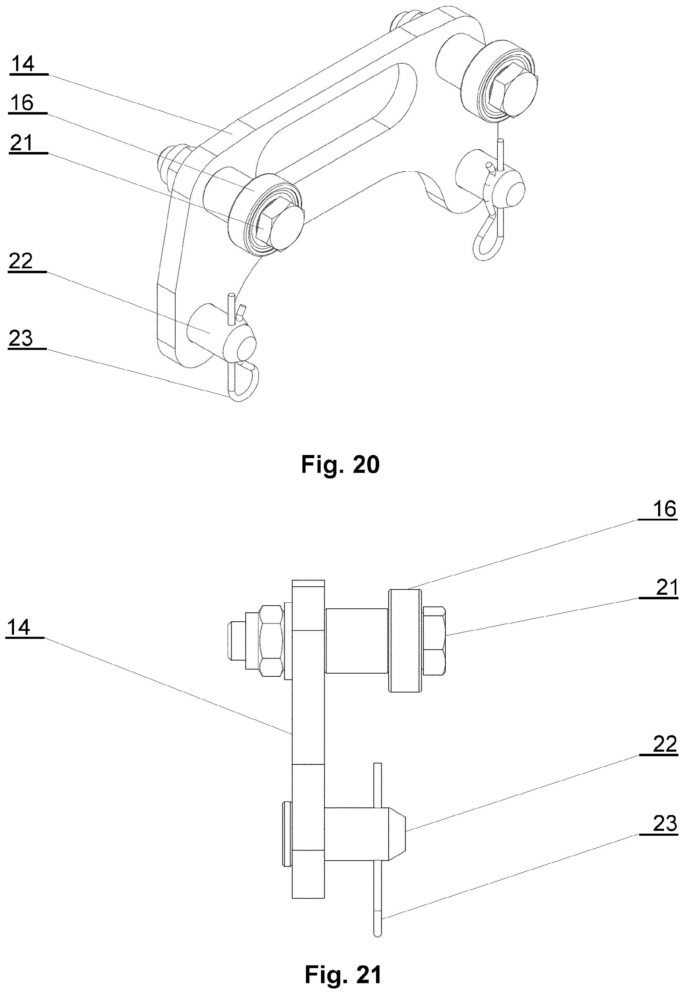

- Fig. 20: presents the roller for moving the working sections along the rails of the bearing element of the working unit of the invention in a perspective view;
- Fig. 21: presents the roller for moving the working sections along the rails of the bearing element of the working unit of the invention in a view from the side;

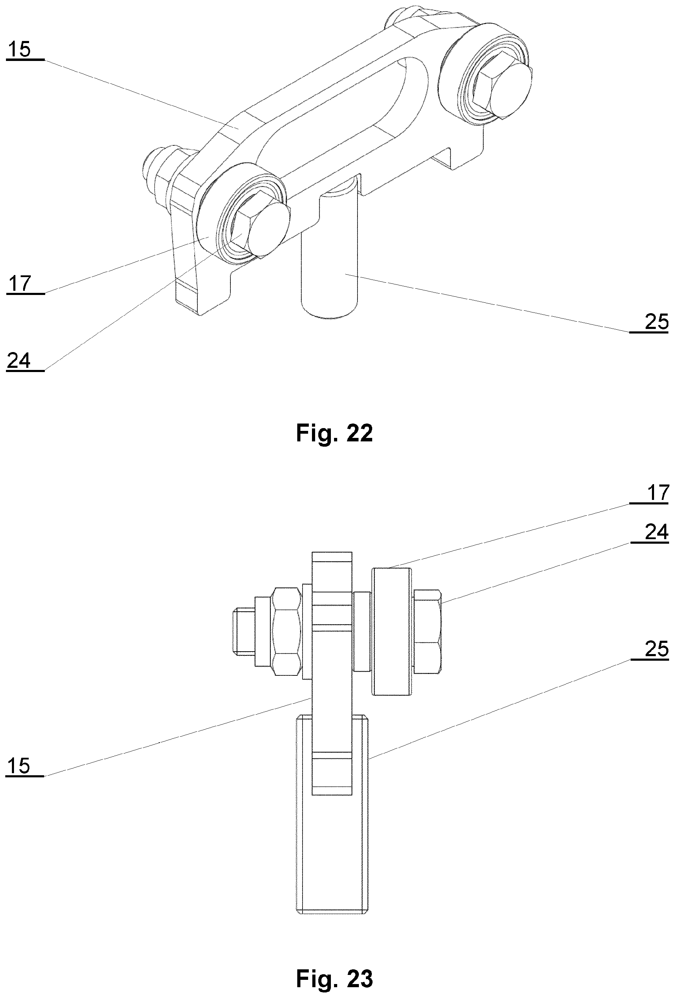

- Fig. 22: presents the roller for moving the working sections along the rails of the rear bearing element of the working unit of the invention in a perspective view;
- Fig. 23: presents the means for shifting the working sections along the rails of the rear bearing element of the working unit of the invention in a view from the side.

### Detailed description of the invention

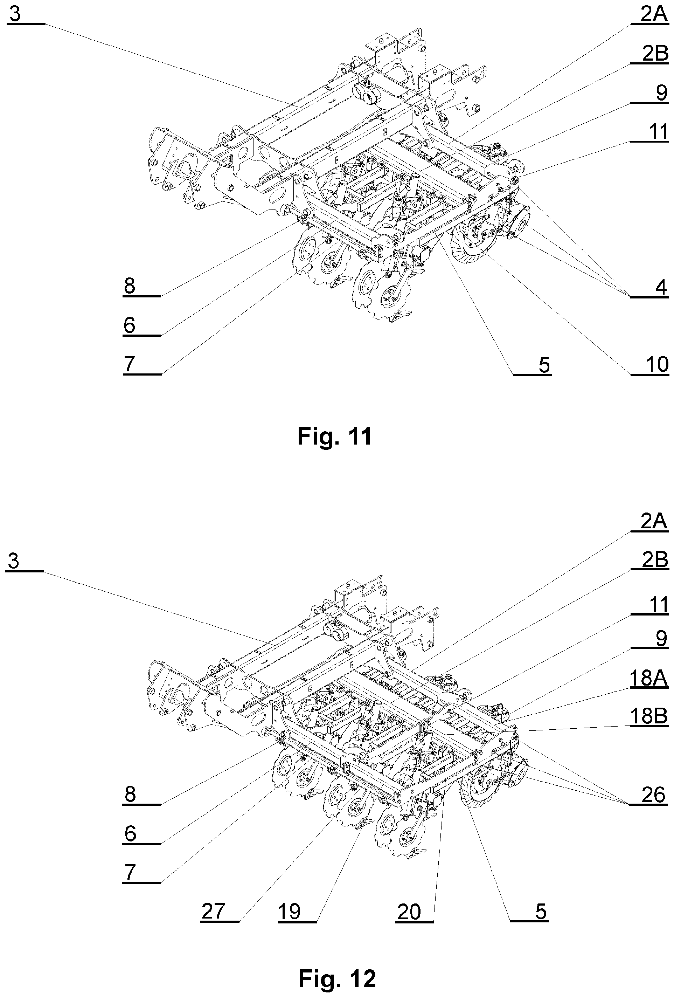

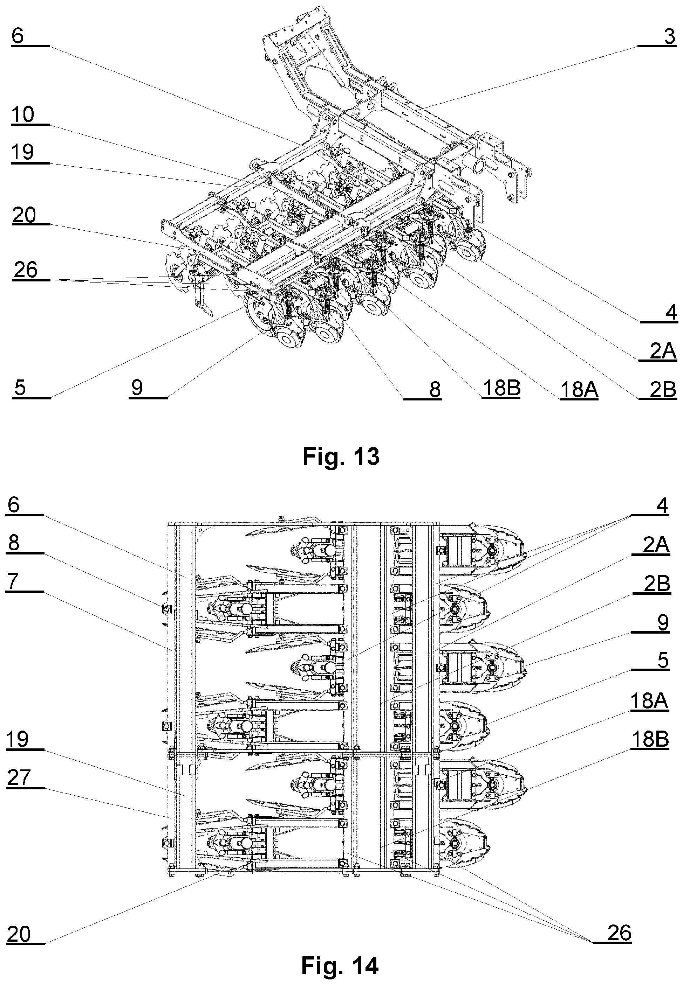

Fig. 12-15 presents the working unit 1 of a cultivator, especially a strip-till cultivator, comprising a bearing element 2 adapted to be fixed to the main frame 3 of the cultivator, a rear bearing element 6 parallel to the bearing element 2 adapted to be fixed to the main frame 3 of the cultivator, and first working sections 5 for soil cultivation. Both the bearing element 2 and the rear bearing element 6 may be fixed to the main frame 3 of the cultivator rigidly, slidingly or rotationally.

Application of the rear bearing element 6 makes it possible to use working sections for soil cultivation of various lengths and, furthermore, increases the durability of the working unit 1 as a result of the change in the distribution of stresses acting on both the bearing element 2 and the rear bearing element 6.

The bearing element 2 has a form of a frame that has two beams 2A, 2B connected by connecting members 11. The beam 2A comprises a rail 4 for fixing the first working sections 5 on the side of the longitudinal lateral surface that is oriented in the travel direction of the cultivator (the arrow). In turn, the beam 2B comprises rails 4 for fixing the first working sections 5 arranged along the beam 2B on the opposite sides of said beam 2B.

The rear bearing element 6 is equipped with a rail 7 for fixing the first working sections 5, which is located on the side of the longitudinal lateral surface that is oriented in the direction opposite to the travel direction of the cultivator. Said rear bearing element 6 is connected to the bearing element 2 by means of the connecting member 10 located at the end of the bearing element 2 opposite to the main frame 3 of the cultivator. The rails 4 of the bearing element 2 and the rail 7 of the rear bearing element 6 ensure stepless adjustment of the position of the first working sections 5, and as a result of the spacing between them, along the entire length of said bearing element 2 and rear bearing element 6. As a result, the first working sections 5 may be positioned at any point along the entire length of the rails 4, 7 of the bearing element 2 and of the rear bearing element 6, and the spacing between said first sections 5 may or may not be regular, depending on the needs of a user. It is no longer necessary to design bearing elements with rigidly fixed working sections whose spacing is determined by guidelines about crop sowing spacing, which vary from one country to another. Consequently, it is no longer necessary for any person to go under the cultivator, because the first working sections 5 can be slid from the side onto the rails 4, 7 on both sides of the bearing element 2 and of the rear bearing element 6 and steplessly moved into a determined position. Therefore, the range of positions of the first working sections 5 is limited only by the length of the bearing element 2 and of the rear bearing element 6. This solution makes it easier to install, use, and maintain the first working sections 5 and as a result also the cultivator.

In another embodiment, the bearing element 2 may have a form of a single beam that has rails 4 for fixing first working sections 5 along the bearing element 2 on the opposite sides of said bearing element 2 . In this case, the position of the working sections is adjusted in an analogous manner.

Each of the first working sections 5 is suspended from the rails 4 of the beam 2B of the bearing element 2 and on the rail 7 of the rear bearing element 6 by means of five locking elements 8 in a form of clamping elements. Four locking elements 8 are coupled with the rails 4 of the beam 2B, and one locking element 8 is coupled with the rail 7 of the rear bearing element 6. The locking elements 8 are adapted for locking the first working sections 5 in a determined position and, as a result, they ensure that a stable connection of the bearing element 2, the rear bearing element 6 and the first working sections 5 is maintained.

The first working sections 5 comprise rollers 16 for moving them along the rail 4 of the beam 2B of the bearing element 2 located on the side of the longitudinal lateral surface oriented in the travel direction of the cultivator as well as rollers 17 for moving them along the rail 7 of the rear bearing element 6. The rollers 16 and the rollers 17 are fixed to bodies 14 and bodies 15 and the bodies 14, 15 are detachably connected to the holders of the first working sections 5, for example using bolts and nuts, In both cases, the rollers 16, 17 are fixed to the bodies 14, 15 using bolts 21, 24.

The application of the rollers 16, 17 for moving the first working sections 5 along the rail 4 and along the rail 7 ensures improved adjustment of their position by reducing the friction between the first working sections 5 and the bearing element 2 and the rear bearing element 6 as a result of reducing the contact surface between the rollers 16 and the bearing element 2 and between the rollers 17 and the rear bearing element 6.

Furthermore, each of the bodies 14 has two mandrels 22, which may be welded to it, and two cotter pins 23 respectively, whose purpose is to secure the first working sections 5 and the bodies 14 against displacement in relation to each other.

In another embodiment, each of the bodies 14 may have one mandrel 22 and one cotter pin 23 respectively. In yet other embodiments, each body 14 may have more than two mandrels 22 and more than two cotter pins 23.

In turn, each of the bodies 15 also has a supporting element 25, for example in a form of a cylinder or sleeve. Moreover, the each of bodies 15 is adapted for fixing the supporting element 25 in its bottom surface.

In other embodiments, instead of the rollers 16, 17 fixed to the bodies 14, 15, there may be used a plate, e.g. a Teflon plate, or a clamp. Also, carriages or guides may be used to moving the first working sections 5.

The disclosed working unit 1 is a modular unit and comprises an extension element 18A, 18B for making the bearing element 2 longer and an extension element 19 for making the rear bearing element 6 longer. The extension element 18A, 18B has a form of a frame comprising two beams 18A, 18B with rails 26. The extension element 18A, 18B may be fixed to the bearing element 2 using bolted joints, so that the rails 26 of the beams 18A, 18B adhere to the rails 4 of the beams 2A, 2B of the bearing element 2. In turn, the extension element 19 has a form of a beam comprising a rail 27. The extension element 19 may be fixed to the rear bearing element 6 using bolted joints so that the rail 27 of the extension element 19 adheres to the rail 7. The extension elements 18A, 18B, 19 extend the rails 4 of the bearing element 2 and the rail 7 of the rear bearing element 6 respectively, allowing the first working sections 5 to be shifted over a greater range.

The weight and size of the bearing element 2 and of the extension element 18A, 18B for making the bearing element 2 longer as well as of the rear bearing element 6 and of the extension element 19 for making the rear bearing element 6 longer, allow the working unit 1 to be enlarged, e.g. from a width of 3 m to 6 m, without the need for the use of heavy equipment such as cranes, jacks, gantries, or forklifts. In this case, the position of the first working sections 5 is adjustable along the entire length of the elements 2, 18A, 18B and the elements 6, 19.

The extension elements 18A, 18B, 19 of the bearing element 2 and of the rear bearing element 6, respectively, are connected by means of the connecting member 20.

Furthermore, the working unit 1 comprises second working sections 9 that are shorter than the first working sections 5. Each of the second working sections 9 for soil cultivation is fixed to each of the rails 4 of the beams 2A, 2B of the bearing element 2 by means of five locking elements 8 in a form of clamping elements. Four locking elements 8 are coupled with the rails 4 of the beam 2B, and one locking element 8 is coupled with the rail 4 of the beam 2A. The locking elements 8 ensure that a stable connection is maintained between the bearing element 2 and the second working sections 9.

The second working sections 9 comprise rollers 16 for moving them along the opposite rails 4 of the beam 2B of the bearing element 2. The rollers 16 are fixed to the bodies 14. The bodies 14 are detachably connected to the holders of the second working sections 9, for example using bolts and nuts. Each of the second working sections 9 comprises two bodies 14. The application of the rollers 16 for moving the second working sections 9 ensures improved adjustment of their position by reducing friction between the second working sections 9 and the bearing element 2 as a result of reducing the contact surface between the rollers 16 for moving and the bearing element 2.

As above-mentioned, the working unit 1 is a modular unit and comprises the extension element 18A, 18B for making the bearing element 2 longer. Thus, it is also possible to steplessly adjust the second working sections 9 along the entire length of the bearing element 2 and of the extension element 18A, 18B for making the bearing element 2 longer.

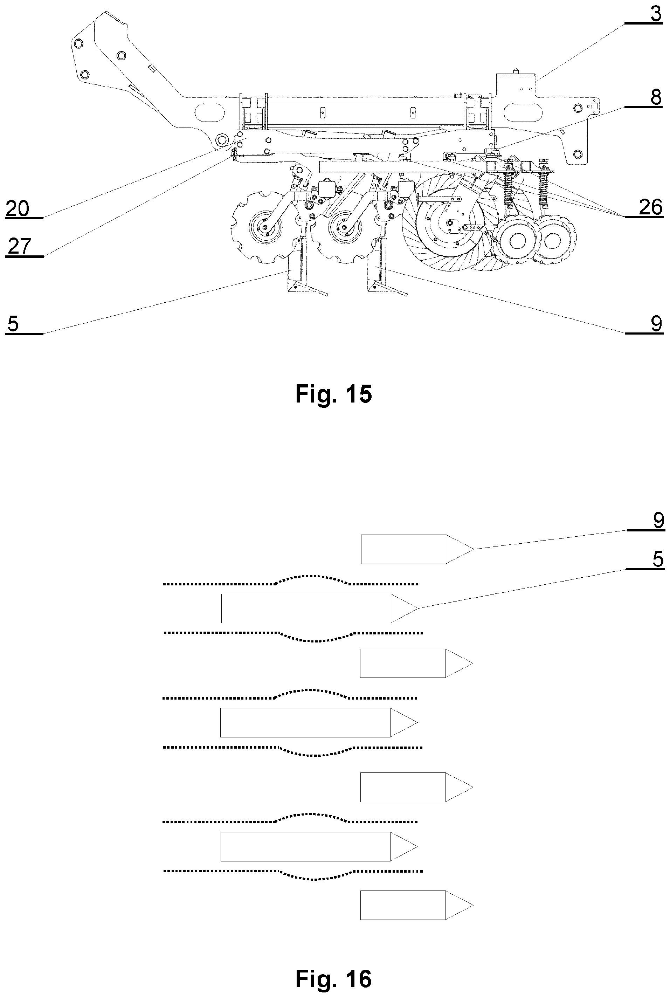

The first working sections 5 and the second working sections 9, which are shorter than the first working sections 5, are offset from each other as schematically presented in Fig. 16, for example by 536 mm. Due to applying said displacement, the first and second working sections 5, 9 push aside and lift up the cultivated soil, which facilitates the soil's flow between them. What is more, said offset also enables the flow of mulch, straw, or harvest residues from the field between the sections 5, 9. This is demonstratively illustrated with the dashed lines in Fig. 16. As a result, the disclosed offset of the working sections 5, 9 ensures improved smoothness of work of the cultivator thanks to the reduction in its pull force.

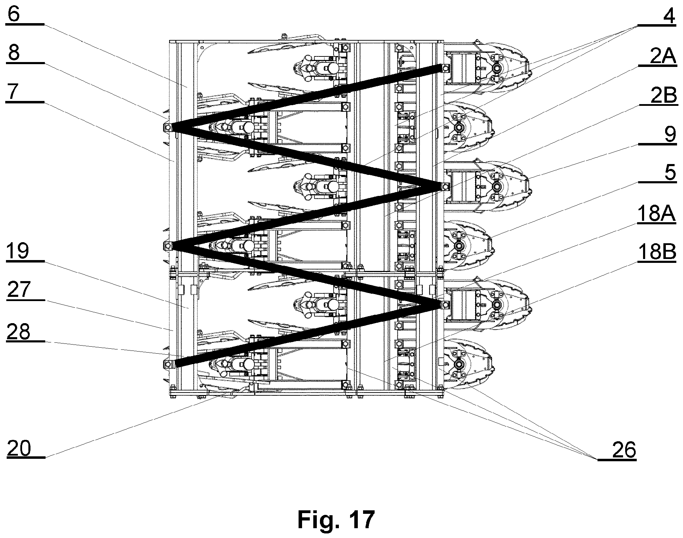

In addition, the first working sections 5 and the second working sections 9 are connected to each other by means of connecting members 28, which form a lattice (Fig. 17). Said lattice ensures increased resistance of the working unit's construction to loads generated during the operation of the cultivator.

## Claims

1. A working unit (1) of a cultivator comprising:
- a bearing element (2) adapted to be fixed to the main frame (3) of the cultivator,
- at least one first working section (5) for soil cultivation,
- at least one locking element (8) adapted for locking the at least one first working section (5) in a determined position,
- at least one second working section (9) for soil cultivation,
wherein
- the bearing element (2) comprises rails (4) for fixing the at least one first working section (5), said rails (4) arranged along the bearing element (2) on the opposite sides of said bearing element (2);
- the working unit (1) further comprises a rear bearing element (6) parallel to the bearing element (2) adapted to be fixed to the main frame (3) of the cultivator and equipped with at least one rail (7) for fixing the at least one first working section (5), said at least one rail (7) arranged along the rear bearing element (6), and
- the at least one first working section (5) is suspended from at least one rail (4) of the bearing element (2) and the at least one rail (7) of the rear bearing element (6) by means of the at least one locking element (8),
**characterized in that**
- at least one of the working sections (5, 9) comprises at least one body (14, 15) and at least one roller (16, 17) for moving it along the rails (4, 7), wherein the at least one roller (16, 17) is fixed to the at least one body (14, 15) and the at least one body (14, 15) is connected to the remaining part of the at least one of the working sections (5, 9).

2. The working unit according to claim 1, **characterized in that** the at least one of the working sections (5, 9) comprises at least two rollers (16, 17).

3. The working unit according to claim 1 or 2, **characterized in that** the least one body (14, 15) is detachably connected to the at least one of the working sections (5, 9).

4. The working unit according to any of the claims from 1 to 3, **characterized in that** the at least one of the working sections (5, 9) comprises at least two bodies (14, 15) arranged in such a way that each body moves along a different rail (4) when the working sections (5, 9) are being moved.

5. The working unit according to any of the previous claims, **characterized in that** the at least one second working section (9) is shorter than the at least one first working section (5) and it is suspended from at least two rails (4) of the bearing element (2) or from at least two rails (7) of the rear bearing element (6).

6. The working unit according to any of the previous claims, **characterized in that** the at least one first and the at least one second working section (5, 9) are offset from each other.

7. The working unit according to any of the previous claims, **characterized in that** the rear bearing element (6) is connected to the bearing element (2) by means of at least one connecting member (10).

8. The working unit according to claim 7, **characterized in that** the at least one connecting member (10) is located at the end of the bearing element (2) opposite to the main frame (3) of the cultivator.

9. The working unit according to any of the previous claims, **characterized in that** the bearing element (2) has a form of a frame that has at least two beams (2A, 2B) connected by connecting members (11), wherein the rails (4) are located on at least one side of each of the beams (2A, 2B).

10. The working unit according to any of the previous claims, **characterized in that** it comprises at least one extension element (18A, 18B) for making the bearing element (2) longer.

11. The working unit according to any of the previous claims, **characterized in that** it comprises at least one extension element (19) for making the rear bearing element (6) longer.

12. The working unit according to claim 11, **characterized in that** the extension elements (18A, 18B, 19) are connected by a connecting member (20).

## Patentansprüche

1. Eine Arbeitseinheit (1) eines Grubbers, die Folgendes umfasst:
- ein Lagerelement (2), das am Hauptrahmen (3) des Grubbers befestigt werden kann,
- mindestens einen ersten Arbeitsabschnitt (5) für die Bodenbearbeitung,
- mindestens ein Verriegelungselement (8), das zum Verriegeln des mindestens einen ersten Arbeitsabschnitts (5) in einer bestimmten Position dient,
- mindestens einen zweiten Arbeitsabschnitt (9) für die Bodenbearbeitung,
wobei
- das Lagerelement (2) Schienen (4) zur Befestigung des mindestens einen ersten Arbeitsabschnitts (5) umfasst, wobei die Schienen (4) entlang des Lagerelements (2) auf den gegenüberliegenden Seiten des Lagerelements (2) angeordnet sind;
- die Arbeitseinheit (1) außerdem ein hinteres Lagerelement (6) umfasst, das parallel zum Lagerelement (2) verläuft und am Hauptrahmen (3) des Grubbers befestigt werden kann und mit mindestens einer Schiene (7) zur Befestigung des mindestens einen ersten Arbeitsabschnitts (5) ausgestattet ist, wobei die mindestens eine Schiene (7) entlang des hinteren Lagerelements (6) angeordnet ist, und
- der mindestens eine erste Arbeitsabschnitt (5) mittels des mindestens einen Verriegelungselements (8) an mindestens einer Schiene (4) des Lagerelements (2) und der mindestens einen Schiene (7) des hinteren Lagerelements (6) aufgehängt ist,
**dadurch gekennzeichnet, dass**
- mindestens einer der Arbeitsabschnitte (5, 9) mindestens einen Körper (14, 15) und mindestens eine Rolle (16, 17) umfasst, um ihn entlang der Schienen (4, 7) zu bewegen, wobei die mindestens eine Rolle (16, 17) an dem mindestens einen Körper (14, 15) befestigt ist und der mindestens eine Körper (14, 15) mit dem restlichen Teil des mindestens einen der Arbeitsabschnitte (5, 9) verbunden ist.

2. Die Arbeitseinheit nach Anspruch 1, **dadurch gekennzeichnet, dass** der mindestens eine der Arbeitsabschnitte (5, 9) mindestens zwei Rollen (16, 17) umfasst.

3. Die Arbeitseinheit nach Anspruch 1 oder 2, **dadurch gekennzeichnet, dass** der mindestens eine Körper (14, 15) lösbar mit dem mindestens einen der Arbeitsabschnitte (5, 9) verbunden ist.

4. Die Arbeitseinheit nach einem der Ansprüche 1 bis 3, **dadurch gekennzeichnet, dass** der mindestens eine der Arbeitsabschnitte (5, 9) mindestens zwei Körper (14, 15) umfasst, die so angeordnet sind, dass sich jeder Körper entlang einer anderen Schiene (4) bewegt, wenn die Arbeitsabschnitte (5, 9) bewegt werden.

5. Die Arbeitseinheit nach einem der vorhergehenden Ansprüche, **dadurch gekennzeichnet, dass** der mindestens eine zweite Arbeitsabschnitt (9) kürzer ist als der mindestens eine erste Arbeitsabschnitt (5) und an mindestens zwei Schienen (4) des Lagerelements (2) oder an mindestens zwei Schienen (7) des hinteren Lagerelements (6) aufgehängt ist.

6. Die Arbeitseinheit nach einem der vorhergehenden Ansprüche, **dadurch gekennzeichnet, dass** der mindestens eine erste und der mindestens eine zweite Arbeitsabschnitt (5, 9) gegeneinander versetzt sind.

7. Die Arbeitseinheit nach einem der vorhergehenden Ansprüche, **dadurch gekennzeichnet, dass** das hintere Lagerelement (6) mit dem Lagerelement (2) durch mindestens ein Verbindungselement (10) verbunden ist.

8. Die Arbeitseinheit nach Anspruch 7, **dadurch gekennzeichnet, dass** sich das mindestens eine Verbindungselement (10) an dem, dem Hauptrahmen (3) des Grubbers gegenüberliegenden Ende des Lagerelements (2) befindet.

9. Die Arbeitseinheit nach einem der vorhergehenden Ansprüche, **dadurch gekennzeichnet, dass** das Lagerelement (2) die Form eines Rahmens mit mindestens zwei Trägern (2A, 2B) hat, die durch Verbindungselemente (11) verbunden sind, wobei die Schienen (4) auf mindestens einer Seite jedes Trägers (2A, 2B) angeordnet sind.

10. Die Arbeitseinheit nach einem der vorhergehenden Ansprüche, **dadurch gekennzeichnet, dass** sie mindestens ein Verlängerungselement (18A, 18B) umfasst, um das Lagerelement (2) zu verlängern.

11. Die Arbeitseinheit nach einem der vorhergehenden Ansprüche, **dadurch gekennzeichnet, dass** sie mindestens ein Verlängerungselement (19) umfasst, um das hintere Lagerelement (6) zu verlängern.

12. Die Arbeitseinheit nach Anspruch 11, **dadurch gekennzeichnet, dass** die Verlängerungselemente (18A, 18B, 19) durch ein Verbindungselement (20) verbunden sind.

## Revendications

1. Une unité de travail (1) d'un cultivateur comprenant :
- un élément porteur (2) destiné à être fixé au châssis principal (3) du cultivateur,
- au moins une première section de travail (5) pour cultiver le sol,
- au moins un élément de verrouillage (8) adapté pour verrouiller l'au moins une première section de travail (5) dans une position déterminée,
- au moins une deuxième section de travail (9) pour cultiver le sol,
dans laquelle
- l'élément porteur (2) comprend des rails (4) pour la fixation d'au moins une première section de travail (5), lesdits rails (4) étant disposés le long de l'élément porteur (2) sur les côtés opposés dudit élément porteur (2) ;
- l'unité de travail (1) comprend en outre un élément porteur arrière (6) parallèle à l'élément porteur (2) adapté pour être fixé au châssis principal (3) du cultivateur et équipé d'au moins un rail (7) pour fixer au moins une première section de travail (5), ledit au moins un rail (7) étant disposé le long de l'élément porteur arrière (6), et
- l'au moins une première section de travail (5) est suspendue à au moins un rail (4) de l'élément porteur (2) et à au moins un rail (7) de l'élément porteur arrière (6) au moyen d'au moins un élément de verrouillage (8),
**caractérisée en ce que**
- au moins une des sections de travail (5, 9) comprend au moins un corps (14, 15) et au moins un rouleau (16, 17) pour le déplacer le long des rails (4, 7), dans laquelle au moins un rouleau (16, 17) est fixé à au moins un corps (14, 15) et l'au moins un corps (14, 15) est relié à la partie restante d'au moins une des sections de travail (5, 9).

2. L'unité de travail selon la revendication 1, **caractérisée en ce que** l'une au moins des sections de travail (5, 9) comprend au moins deux rouleaux (16, 17).

3. L'unité de travail selon la revendication 1 ou 2, **caractérisée en ce que** l'au moins un corps (14, 15) est relié de manière amovible à l'une au moins des sections de travail (5, 9).

4. L'unité de travail selon l'une des revendications de 1 à 3, **caractérisée en ce que** l'une au moins des sections de travail (5, 9) comprend au moins deux corps (14, 15) disposés de telle sorte que chaque corps se déplace le long d'un rail différent (4) lors du déplacement des sections de travail (5, 9).

5. L'unité de travail selon l'une des revendications précédentes, **caractérisée en ce que** l'au moins une deuxième section de travail (9) est plus courte que l'au moins une première section de travail (5) et qu'elle est suspendue à au moins deux rails (4) de l'élément porteur (2) ou à au moins deux rails (7) de l'élément porteur arrière (6).

6. L'unité de travail selon l'une des revendications précédentes, **caractérisée en ce que** l'au moins une première et l'au moins une deuxième section de travail (5, 9) sont décalées l'une par rapport à l'autre.

7. L'unité de travail selon l'une des revendications précédentes, **caractérisée en ce que** l'élément porteur arrière (6) est relié à l'élément porteur (2) au moyen d'au moins un élément de liaison (10).

8. L'unité de travail selon la revendication 7, **caractérisée en ce que** l'au moins un élément de liaison (10) est situé à l'extrémité de l'élément porteur (2) opposée au cadre principal (3) du cultivateur.

9. L'unité de travail selon l'une des revendications précédentes, **caractérisée en ce que** l'élément porteur (2) a la forme d'un cadre comportant au moins deux poutres (2A, 2B) reliées par des éléments de liaison (11), dans laquelle les rails (4) sont situés sur au moins un côté de chacune des poutres (2A, 2B).

10. L'unité de travail selon l'une des revendications précédentes, **caractérisée en ce qu'**elle comprend au moins un élément d'extension (18A, 18B) pour augmenter la longueur de l'élément porteur (2).

11. L'unité de travail selon l'une des revendications précédentes, **caractérisée en ce qu'**elle comprend au moins un élément d'extension (19) pour augmenter la longueur de l'élément porteur (6).

12. L'unité de travail selon la revendication 11, **caractérisée en ce que** les éléments d'extension (18A, 18B, 19) sont reliés par un élément de liaison (20).
